# EUROPÄISCHE PATENTSCHRIFT

(11) **EP 2 402 180 B1**
(45) Veröffentlichungstag und Bekanntmachung des Hinweises auf die Patenterteilung: **18.05.2016**
(21) Anmeldenummer: 11170905.1
(22) Anmeldetag: 22.06.2011
(51) Int. Cl.: B60G 11/28

(54) **Luftgefederte Fahrzeugachse**
Vehicle axle with air spring
Axe de véhicule à suspension pneumatique

(30) Priorität: 30.06.2010 DE 102010017671
(43) Veröffentlichungstag der Anmeldung: 04.01.2012
(73) Patentinhaber: BPW Bergische Achsen KG, 51674 Wiehl (DE)
(72) Erfinder: Gmeiner, Swen, 51709 Marienheide (DE); Kriegeskotte, Thomas, 51580 Reichshof (DE); Berghaus, Roland, 51789 Lindlar (DE); Michels, Manfred, 51067 Köln (DE)
(74) Vertreter: Christophersen, Ulrich Rudolf

(56) Entgegenhaltungen:
- EP-A2- 1 691 105
- DE-B3-102006 032 383
- FR-A3- 2 827 550
- JP-A- 8 014 299
- JP-A- 11 303 919
- US-A1- 2006 055 094

## Beschreibung

Die Erfindung betrifft eine luftgefederte Fahrzeugachse nach dem Oberbegriff der Patentansprüche 1 und 11.

Luftfedern, wie sie aus der EP 1 691 105 A2, gemäß dem Oberbegriff der Ansprüche 1 und 11, und der US 4,923,210 zum Einsatz in luftgefederten Fahrzeugachsen bekannt sind, bestehen aus einem ein Druckluftvolumen einschließenden, verformungsfähigen Rollbalg, der mit einem luftdichten oberen Abschlussdeckel an einem Chassisteil des Fahrzeugs befestigbar ist, sowie aus einem den Rollbalg nach unten hin verschließenden Tauchkolben, welcher beim Einfedern der Luftfeder in das Volumen des Rollbalgs eindringt. Der Tauchkolben wird am Fahrwerk befestigt, und zwar entweder durch Befestigung direkt auf der Oberseite der Fahrzeugachse, oder durch Befestigung auf der Oberseite eines die Fahrzeugachse führenden Längslenkers. Der aus Kautschuk oder einem walkfähigen Thermoplast bestehende Rollbalg ist ausschließlich für eine Längsverformung ausgelegt, d. h. für das Abrollen auf der Mantelfläche des Tauchkolbens. Verspannungen des Rollbalgs um seine eigene Achse sind zu vermeiden, da diese seine Lebensdauer stark beeinträchtigen würden. Sowohl der Abschlussdeckel, welcher den Rollbalg gegenüber dem Chassis festlegt, als auch der Tauchkolben, welcher den Rollbalg gegenüber dem jeweiligen Fahrwerksteil festlegt, müssen daher in einer solchen neutralen Drehlage montiert sein, dass keine Verdrillkräfte am Rollbalg wirken. Dies lässt sich im Prinzip erreichen, indem der Tauchkolben zentral mittels einer auf seiner Längsachse angeordneten Schraube an dem Fahrwerksteil befestigt wird. Denn die Zentralverschraubung bietet die Möglichkeit, bei im Übrigen bereits komplett montierter Luftfederbaugruppe den Tauchkolben noch so um seine Längsachse auszurichten, dass nach Abschluss der Montage der Rollbalg frei von Umfangskräften ist.

Auch die Luftfedern nach der EP 1 691 105 A2 und der US 4,923,210 weisen eine Zentralverschraubung auf. Eine Ausrichtung durch Veränderung der Drehlage des Tauchkolbens im Rahmen der Montage der Luftfederbaugruppe ist allerdings ausgeschlossen, da der Tauchkolben außerhalb seiner Zentralverschraubung mit einer Struktur versehen ist, die eine Befestigung des Tauchkolbens nur in bestimmten Drehlagen zulässt. An der Unterseite des Tauchkolbens nach der EP 1 691 105 A2 ist zu diesem Zweck eine Struktur in Gestalt eines von der Bodenfläche nach unten hervorstehenden Zapfens ausgebildet. Man wird sich vorstellen können, dass dieser formschlüssig in eine korrespondierend gestaltete Einsenkung eingreift, mit der der Längslenker zusätzlich versehen werden muss. Bei dem Tauchkolben nach der US 4,923,210 ist dessen Ausrichtung durch die Lage zusätzlicher, in den Tauchkolbenmantel eingreifender Schrauben festgelegt. Für diese Schrauben muss der Längslenker mit zusätzlichen Bohrungen versehen werden. Die Luftfedern gemäß diesen Druckschriften erfordern bereits vor ihrer Befestigung eine abschließende, korrekte Ausrichtung der Luftfederteile zueinander, d. h. oberer Abschlussdeckel, Rollbalg und Tauchkolben müssen bereits in Umfangsrichtung fertig justiert sein. Eine solche vorherige Justierung stellt einen erhöhten montagetechnischen Aufwand dar, vor allem wenn mit der Justierung eine individuelle Einbausituation berücksichtigt werden muss.

Bei der luftgefederten Fahrzeugachse nach der US 2006/0055094 A1 ist der Tauchkolben um seine Verschraubung mit dem Längslenker des Fahrzeugs herum mit mehreren nach unten vorstehenden, federnden Zungen versehen. Diese sind von solcher Länge, dass sie eine Öffnung im Längslenker komplett durchragen und aufgrund ihrer Federwirkung an dessen Unterseite verhaken. Durch das Verhaken kommt es zu einem axialen Formschluss des Tauchkolbens mit dem Längslenker. Hingegen sind keine Maßnahmen beschrieben, durch die sich ein Verdrehen des Tauchkolbens und damit der Luftfeder während der Montage oder während des Fahrbetriebes verhindern lässt.

Liegen oberer Abschlussdeckel, Rollbalg und Tauchkolben bereits als luftdicht vormontierte Luftfederbaugruppe vor, die nur noch gegenüber einerseits Fahrzeugchassis und andererseits Fahrwerk befestigt werden muss, wird zunächst der obere Abschlussdeckel einschließlich seiner örtlich festgelegten Druckluftanschlüsse fest unter das Fahrzeugchassis geschraubt. Die sodann unter ihrem Eigengewicht herabhängende Luftfeder wird anschließend mit dem Längslenker verbunden, wozu die in den Tauchkolben eingreifende Zentralverschraubung angezogen wird. Bei diesem Anziehen mittels üblicherweise eines Schraubenschlüssels kann es zu leichten Mitnahmeeffekten kommen, d. h. einem ungewollten Mitdrehen des Tauchkolbens. Das Mitdrehen ist nicht groß, reicht aber aus, innerhalb der Luftfeder eine gewisse Längsverdrehung hervorzurufen. Nach Abschluss der Luftfedermontage sind daher die Teile der Luftfeder nicht exakt zueinander spannungsfrei ausgerichtet, und es kann zu den beschriebenen Problemen hinsichtlich der Lebensdauer des Rollbalgs kommen.

Der Erfindung liegt daher die Aufgabe zugrunde, die Montage der Luftfeder auf der Oberseite des Fahrwerksteils zu vereinfachen, ohne dass es während der Montage zu einem in sich Verdrehen der Luftfederbaugruppe kommen kann.

Zur Lösung wird eine luftgefederte Fahrzeugachse mit den Merkmalen der Patentansprüche 1 und 11 vorgeschlagen.

Die erfindungsgemäße Struktur, bei der es sich um einen einzigen Vorsprung oder um eine Gruppe von Vorsprüngen handeln kann, wird beim Anziehen der zentralen Verschraubung zumindest teilweise durch Quetschen verformt. Denn sobald durch Anziehen der Zentralverschraubung eine Längskraft auf den Tauchkolben ausgeübt wird, kommt es zu Verformungen des Vorsprungs bzw. der Vorsprünge mit der Folge eines früh einsetzenden Formschlusses in Umfangsrichtung. Der frühe Formschluss ist nicht sehr groß, er ist jedoch größer als das beim Verschrauben auf den Tauchkolben übertragene Verdrehmoment, so dass es bereits in einem frühen Stadium des Anziehens der Verschraubung zu keinem Mitdrehen des Tauchkolbens in Bezug auf den unterhalb angeordneten Längslenker mehr kommen kann. Damit der durch Quetschen erzielte Formschluss unabhängig von der jeweiligen Drehlage des Tauchkolbens eintritt, sind der Vorsprung bzw. die Gruppe von Vorsprüngen um die zentrale Befestigungsöffnung herum verteilt angeordnet, z. B. durch Anordnen des Vorsprungs bzw. der Gruppe von Vorsprüngen in Form eines Rings um die zentrale Befestigungsöffnung herum. Bereits beim ersten Anziehen der Verschraubung werden nur solche Bereiche bzw. Abschnitte des Vorsprungs bzw. der Vorsprünge gequetscht, die in Anlage zu dem Längslenker sind. Die übrigen Bereiche bzw. Abschnitte bleiben unverformt, wobei der Formschluss gerade an den stufigen Übergängen zwischen verformten und nicht verformten Bereichen bzw. Abschnitten entsteht.

Mit einer Ausgestaltung wird vorgeschlagen, dass die Bodenfläche des Tauchkolbens innerhalb des durch den Vorsprung bzw. die Vorsprünge gebildeten Rings eine zum Tauchkolben hin eingezogene Kontur aufweist, vorzugsweise eine sphärisch gewölbte bzw. konkave Kontur. Durch eine leicht eingezogene Kontur der Unterseite des Tauchkolbens wird sichergestellt, dass der durch Anziehen der Verschraubung aufgebrachte Druck zuerst auf den Vorsprung bzw. die Vorsprünge übertragen wird.

Mit einer weiteren Ausgestaltung wird vorgeschlagen, dass der Vorsprung bzw. jeder Vorsprung als Rippe mit nach unten spitz zulaufendem Querschnitt geformt ist. Zum Beispiel kann die Rippe die Querschnittsform eines gleichseitigen Dreiecks aufweisen. Vorzugsweise steht die Spitze des Vorsprungs bzw. der Gruppe von Vorsprüngen zwischen 0,3 und 1,5 mm gegenüber der Grundebene der Bodenfläche hervor. Da der Durchmesser des Tauchkolbens im Bereich des Tauchkolbenmantels ca. 200 mm beträgt, ist die Höhe des verformbaren Vorsprungs, verglichen mit den Dimensionen des Tauchkolbens, sehr gering.

Gemäß einer alternativen, in Patentanspruch 11 angegebenen Lösung können der Vorsprung bzw. die Vorsprünge auch so ausgebildet sein, dass durch den aufgebrachten Druck ein Abbrechen einzelner Vorsprünge eintritt, wodurch gegenüber benachbarten, nicht weggebrochenen Vorsprüngen eine Art Stufe mit der Folge des Formschlusses entsteht.

Der Tauchkolben selbst besteht vorzugsweise aus Kunststoff, wobei der verformbare Vorsprung bzw. die Gruppe von verformbaren Vorsprüngen im Kunststoffmaterial einstückig mit angeformt ist.

Bei einer weiteren Ausgestaltung ist der Tauchkolben mit einer Doppelwandung unter Bildung einer zylindrischen Innenkammer und einer ringförmigen Außenkammer versehen, wobei die Außenwandung den Tauchkolbenmantel einschließlich der Anlagefläche bildet. Die von der Innenwandung umschlossene Innenkammer ist, dem Rollbalg abgewandt, durch die zentral von der Befestigungsöffnung unterbrochene Bodenfläche verschlossen. Vorzugsweise ist, zur Erhöhung der mechanischen Stabilität des Tauchkolbens, die ringförmige Außenkammer des Tauchkolbens, dem Rollbalg zugewandt, verschlossen.

Ebenfalls zur Erhöhung der mechanischen Stabilität des Tauchkolbens ist die Außenwandung über einstückig im Kunststoffmaterial angeformte Stege, vorzugsweise radial angeordnete Stege, mit der Innenwandung verbunden. In ähnlicher Weise kann die Innenwandung über einstückig im Kunststoffmaterial angeformte Stege, vorzugsweise ebenfalls radial angeordnete Stege, mit einer in axialer Verlängerung der Befestigungsöffnung angeordneten Buchse verbunden sein. Die Buchse dient der verbesserten Führung und seitlichen Abstützung der in den Tauchkolben hineinführenden Verschraubung.

Weitere Vorteile und Einzelheiten ergeben sich aus der nachfolgenden Beschreibung eines Ausführungsbeispiels. Es zeigen
- Fig. 1: in einer Seitenansicht eine an Längslenkern geführte Achse eines Fahrzeugs, wobei zur Federung der Achse jeweils eine Luftfeder zwischen Längslenker und Fahrzeugchassis angeordnet ist;

- Fig. 2: in einem Längsschnitt den rückwärtigen Teil des Längslenkers sowie einen darauf mittels einer Verschraubung befestigten Tauchkolben, welcher Bestandteil der Luftfeder ist;
- Fig. 3: eine perspektivische Ansicht von schräg oben auf den Tauchkolben, ohne die weiteren Einzelteile der Luftfeder;
- Fig. 4: den Tauchkolben nach Fig. 2 in einer anderen, durch dessen innere Verrippung führenden Schnittebene;
- Fig. 5: die Einzelheit V der Fig. 4 in stark vergrößertem Maßstab und
- Fign. 6a - 6c: verschiedene Stadien beim Aufsetzen und Verschrauben des Tauchkolbens mit dem Längslenker.

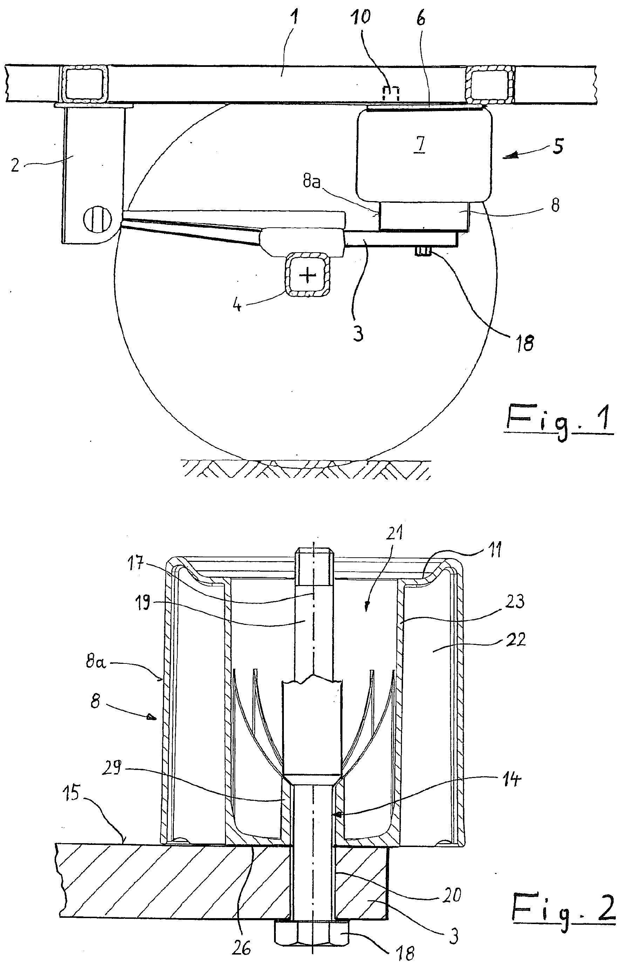

Die Fig. 1 zeigt ein luftgefedertes Fahrwerk, wie es z. B. bei Schwerlast-Anhängerfahrzeugen oder Sattelaufliegern Verwendung findet. Unter dem Chassis des Fahrzeugs ist auf jeder Fahrzeugseite eine Stütze 2 starr befestigt. Schwenkbeweglich in der Stütze 2 gelagert ist auf jeder Fahrzeugseite ein Längslenker 3, an dem, zumeist auf der Mitte des Längslenkers 3, die Fahrzeugachse 4 mit den außen daran gelagerten Rädern befestigt ist.

Der in Fahrtrichtung hintere Bereich jedes Längslenkers 3 bildet eine Auflagefläche 15, auf der sich eine Luftfeder 5 abstützt. Die Luftfeder 5 ist andererseits von unten her gegen das Chassis 1 des Fahrzeugs abgestützt.

Die Luftfeder 5 setzt sich im Wesentlichen aus einem Rollbalg 7, einem Tauchkolben 8 und einem oberen Abschlussdeckel 6 zusammen. Der Abschlussdeckel 6 begrenzt das in dem Rollbalg 7 eingeschlossene Luftvolumen nach oben hin, und ist von unten her fest gegen das Chassis 1 verschraubt. Dies muss in einer bestimmten Drehlage erfolgen, da sich an dem oberen Abschlussdeckel 6 auch der Druckluftanschluss 10 befindet, über den das Volumen der Luftfeder mit einer Druckluftquelle des Fahrzeugs verbindbar ist. Oftmals werden mehrere Befestigungsschrauben verwendet, welche Löcher im Fahrzeugchassis durchgreifen. Der Rollbalg 7 ist druckdicht mit dem Abschlussdeckel 6 verbunden.

Der andere, nämlich untere Rand des Rollbalgs 7 ist, ebenfalls druckdicht, mit dem Tauchkolben 8 verbunden. Hierzu ist der Tauchkolben auf seiner Oberseite mit einer nach innen hin abfallend gestalteten Einsenkung 11 zur Aufnahme und druckdichten Befestigung des Randes des Rollbalgs 7 versehen. Je nach Bauart ist es möglich, dass zumindest ein Teil des Tauchkolbenvolumens als Druckvolumen mitgenutzt wird. Beim Einfedern der Luftfeder 5 vermag der aus Kautschuk oder einem walkfähigen Thermoplast bestehende Rollbalg 7 außen auf dem im Wesentlichen zylindrisch gestalteten Tauchkolben abzurollen. Hierbei dient der Tauchkolbenmantel als Anlagefläche 8a für das Abrollen des Rollbalgs.

Mittels einer Verschraubung 14 ist der Tauchkolben 8 unmittelbar auf der Oberseite 15 des Längslenkers 3 befestigt. Die Verschraubung 14 kann von solcher Länge sein, dass sie zugleich auch dazu dient, die für die druckfeste Verbindung zwischen Rollbalg 7 und Tauchkolben erforderlichen Kräfte aufzubringen. Die Verschraubung 14 befindet sich im Zentrum des Tauchkolbens auf dessen Längsachse 17. Das Anziehen der Verschraubung erfolgt mittels eines geeigneten Schlüsselwerkzeuges, wozu der Schraubenkopf 18 mit Schlüsselflächen versehen ist.

Fig. 2 lässt erkennen, dass wegen der Zentralverschraubung des Tauchkolbens für dessen Befestigung lediglich die Herstellung einer einzigen Öffnung bzw. Bohrung 20 in dem Längslenker 3 erforderlich ist.

Der Tauchkolben 8 besteht aus Kunststoff. Zum Zwecke einer guten Entformbarkeit im Herstellprozess ist er mit einer Doppelwandung unter Bildung einer zylindrischen Innenkammer 21 und einer ringförmigen Außenkammer 22 versehen. Die Außenwandung der Doppelwandung ist der Tauchkolbenmantel, dessen Außenseite die Anlagenfläche 8a für den Rollbalg bildet.

Die von der Innenwandung 23 umschlossene Innenkammer 22 ist, dem Rollbalg abgewandt, durch eine nur eine Befestigungsöffnung 25 frei lassende Bodenfläche 26 verschlossen.

Einstückiger Bestandteil des Tauchkolbens ist ferner eine in axialer Verlängerung zu der Befestigungsöffnung 25 angeordnete Buchse 29. Deren Innenwandung bildet die Öffnung, durch die die Verschraubung 14 hindurchführt. Zumindest ein Element der Verschraubung 14 stützt sich von innen her axial an der Buchse 29 ab, wodurch diese eine zu dem Längslenker 3 hin gerichtete Druckkraft erfährt.

Die Schraube 19 der Verschraubung 14 ist von solcher Länge, dass sie in Höhe der Einsenkung 11 mit einem nicht dargestellten Deckelteil verschraubbar ist. Dem Rollbalg zugewandt, ist die ringförmige Außenkammer 22 durch eine obere Wand verschlossen, deren Außenseite jene Einsenkung 11 bildet, an der der Rollbalg 7 mittels des nicht dargestellten Deckelteils druckdicht festlegbar ist.

Die Außenwandung 8a des Tauchkolbens ist über einstückig im Kunststoffmaterial angeformte, radial verlaufende Stege 31 mit der Innenwandung 23 verbunden, wodurch eine erhöhte radiale Steifigkeit des Tauchkolbens erzielt wird. Ferner ist die Innenwandung 23 über ebenfalls einstückig im Kunststoffmaterial angeformte Stege 32 gegenüber der Buchse 29 abgestützt. Auch die Stege 32 sind radial ausgerichtet, wobei sie hier in radialer Verlängerung zu den äußeren Stegen 31 angeordnet sind, jedoch können die inneren Stege 32 auch auf anderen Segmenten des Tauchkolbens angeordnet sein als die äußeren Stege 31. Zudem kann die Gesamtzahl und Verteilung der inneren Stege 32 anders sein, als jene der äußeren Stege 31. Die Oberkanten der inneren Stege 32 verlaufen so, dass sich zu der zentralen Buchse 29 hin eine symmetrische Parabelgestalt ergibt.

Am Boden ist der Tauchkolben 8 teils offen, teils geschlossen gestaltet. Die ringförmige Außenkammer 22 ist nach unten, also zu dem Längslenker 3 hin, vollständig offen. Im Bereich der Innenkammer 21 hingegen ist der Tauchkolben nach unten hin durch die Bodenfläche 26 verschlossen, wobei die zentrale Befestigungsöffnung 25 offen bleibt, da durch diese die Schraube 19 der Verschraubung 14 hindurchführt.

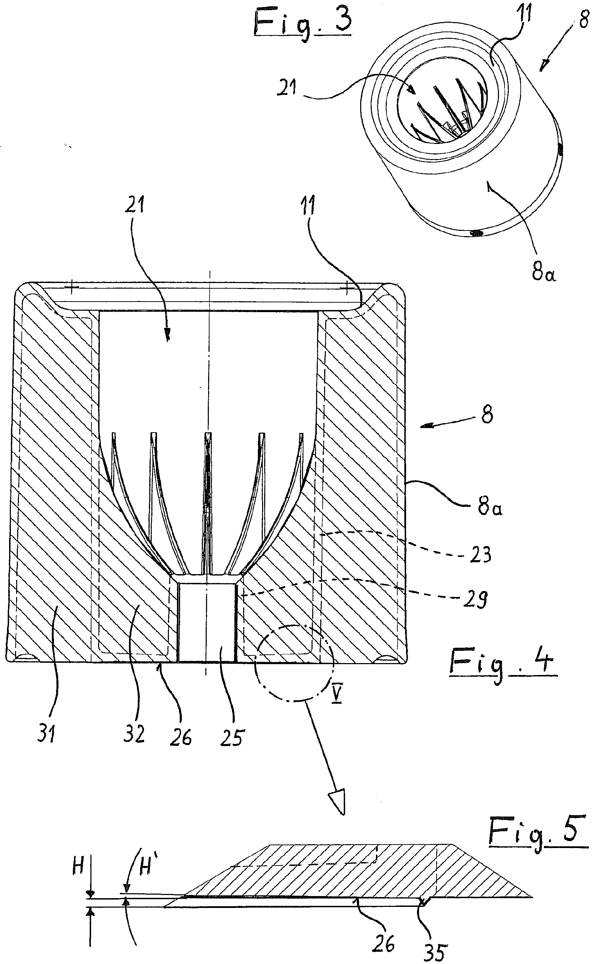

Die weitere Gestaltung im Bereich der Bodenfläche des Tauchkolbens wird im Folgenden anhand der Fig. 4 sowie, in einem deutlich vergrößerten Maßstab, anhand der Fig. 5 erläutert.

Die Bodenfläche 26 hat im Wesentlichen die Gestalt einer Kreisscheibe, welche innen durch die Befestigungsöffnung 25, und außen durch die nach unten offene Außenkammer 22 begrenzt wird. In der Nähe des äußeren Randes der Kreisscheibe befindet sich, einstückig im Tauchkolbenmaterial angeformt, eine nach unten hervorstehende Rippe 35 von spitz zulaufendem Querschnitt. Bei dem hier beschriebenen Ausführungsbeispiel bildet die Rippe 35 einen geschlossenen Ring, in dessen Zentrum sich die Befestigungsöffnung 25 für die Verschraubung befindet. Jedoch kann die Rippe 35 auch eine andere Gestalt als eine geschlossene Ringform aufweisen, oder sie kann aus vielen, gleichmäßig über den Umfang verteilten Einzelrippen zusammengesetzt sein.

Entscheidend ist die Funktion der Rippe bzw. Rippen, gleichmäßig über den Umfang verteilt einen Vorsprung bzw. Vorsprünge zu bilden, welcher/welche im Vergleich zu der durch die Bodenfläche 26 definierten Ebene etwas nach unten hin hervorsteht. Die Bodenfläche kann auch durch schmalere Ringflächen gebildet sein. Die Höhe H des Vorsprungs 35 beträgt z.B. nur 0,5 mm bei einem Durchmesser des Tauchkolbens von 200 mm. Die Höhe H ist daher sehr gering im Vergleich zur Gesamtgröße des Tauchkolbens.

Fig. 5 lässt erkennen, dass der innerhalb des rippenförmigen Vorsprungs 35 angeordnete, unmittelbar der Oberseite 15 des Längslenkers gegenüberliegende Bereich der Bodenfläche 26 nicht völlig eben ist. Vielmehr weist dieser Bereich eine zum Tauchkolben hin um die Höhe Dz eingezogene Kontur auf, welche hier leicht sphärisch gewölbt bzw. konkav verläuft.

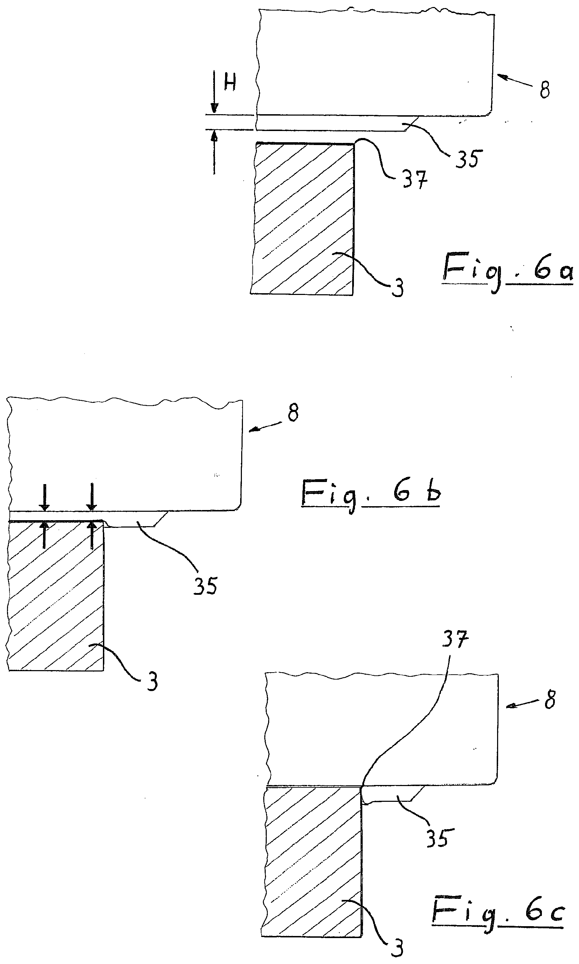

Gemäß den Fign. 6a bis 6c ist es Aufgabe der Rippe 35, beim Anziehen der Verschraubung 14 zumindest auf einer Teillänge durch Quetschen verformt zu werden. Denn sobald mit dem Anziehen der Zentralbefestigung 14 von der Oberseite 15 des Längslenker 3 ein Druck auf den Tauchkolben ausgeübt wird, kommt es gemäß Fig. 6b zu einer ersten Verformung, nämlich axialen Stauchung der im Vergleich zum Tauchkolbenboden nach unten vorstehenden Rippe 35 mit der Folge eines früh einsetzenden Formschlusses. Dieser ist nicht groß, er ist jedoch größer als das beim Verschrauben auf den Tauchkolben übertragene Verdrehmoment, so dass es bereits in einem frühen Stadium des Anziehens der Zentralbefestigung 14 zu keinem Mitdrehen des Tauchkolbens 8 in Bezug auf den unterhalb angeordneten Längslenker 3 mehr kommen kann.

Damit der durch Quetschen erzielte Formschluss bei jeder Drehlage des Tauchkolbens eintritt, sind der Vorsprung 35 bzw. die Gruppe von Vorsprüngen gleichmäßig, z.B. in gleichen Abständen verteilt um die zentrale Befestigungsöffnung 25 herum angeordnet. Dies erfolgt beim Ausführungsbeispiel durch Anordnen des Vorsprungs 35 in Ringform um die zentrale Befestigungsöffnung herum. Dieser Ring kann z.B. einen Durchmesser von 115 mm bei einer Breite des Längslenkers 3 von nur 70 mm aufweisen.

Bereits beim ersten Anziehen der Befestigung werden solche und nur solche Bereiche des Vorsprungs gequetscht, die in Anlage zu dem Längslenker 3 sind. Die übrigen Bereiche bzw. Abschnitte bleiben unverformt, wobei der Formschluss, wie Fig. 6c für den Abschluss der Befestigung veranschaulicht, vor allem an den, bedingt durch die Kanten 37 des Längslenkers 3, stufigen Übergängen zwischen verformten und nicht verformten Bereichen bzw. Abschnitten eintritt.

Bei Verwendung einer Gruppe von Vorsprüngen ist die erzielte Verdrehsicherung umso effektiver, desto geringer die Abstände zwischen den einzelnen Vorsprüngen sind.

Da die Bodenfläche 26 des Tauchkolbens die um die Höhe H' zum Tauchkolben hin eingezogene Kontur aufweist, wird der von der Verschraubung erzeugte Druck unmittelbarer auf die Rippe 35 übertragen und sich anschließend der Boden des Tauchkolbens unter Verschraubungsdruck nach unten durchbiegt.

### Bezugszeichenliste

- 1: Chassis
- 2: Stütze
- 3: Längslenker
- 4: Achse
- 5: Luftfeder
- 6: Abschlussdeckel
- 7: Rollbalg
- 8: Tauchkolben
- 8a: Außenwandung, Tauchkolbenmantel
- 10: Druckluftanschluss
- 11: Einsenkung
- 14: Befestigung, Verschraubung
- 15: Oberseite
- 17: Längsachse
- 18: Schraubenkopf
- 19: Schraube
- 20: Bohrung
- 21: Innenkammer
- 22: Außenkammer
- 23: Innenwandung
- 25: Befestigungsöffnung
- 26: Bodenfläche
- 29: Buchse
- 31: Steg
- 32: Steg
- 35: Vorsprung, Rippe
- 37: Kante

- H: Höhe
- H': Höhe

## Patentansprüche

1. Luftgefederte Fahrzeugachse mit einer an Längslenkern (3) geführten Achse (4) und einem auf dem rückwärtigen Teil des jeweiligen Längslenkers (3) verschraubten Tauchkolben (8), der gemeinsam mit einem Rollbalg (7) Bestandteil einer Luftfeder (5) ist, dessen Tauchkolbenmantel als Anlagefläche (8a) für den Rollbalg (7) beim Einfedern dient und dessen Unterseite zur Abstützung auf der Oberseite (15) des Längslenkers (3) mit einer um eine zentrale Befestigungsöffnung (25) herum angeordneten Bodenfläche (26) versehen ist, wobei mindestens eine Struktur des Tauchkolbens (8), die als ein Vorsprung (35) oder eine Gruppe von Vorsprüngen, der/die um die zentrale Befestigungsöffnung (25) herum verteilt angeordnet ist, ausgebildet ist, gegenüber der Ebene der Bodenfläche (26) nach unten hervorsteht,
**dadurch gekennzeichnet,**
**dass** zur Drehsicherung des Tauchkolbens (8) nur Bereiche der Struktur (35) unter axialer Stauchung und Quetschen in Anlage zu der Oberseite (15) des Längslenkers (3) sind und die übrigen Bereiche der Struktur (35) unverformt sind, mit der Folge eines Formschlusses an den stufigen Übergängen zwischen verformten und unverformten Bereichen.

2. Luftgefederte Fahrzeugachse nach Anspruch 1, **dadurch gekennzeichnet, dass** sich der Vorsprung (35) bzw. die Gruppe von Vorsprüngen in Gestalt eines Rings um die zentrale Befestigungsöffnung (25) herum erstreckt.

3. Luftgefederte Fahrzeugachse nach Anspruch 2, **dadurch gekennzeichnet, dass** die Bodenfläche (26) innerhalb des Rings eine zum Tauchkolben (8) hin eingezogene Kontur aufweist, vorzugsweise eine sphärisch gewölbte bzw. konkave Kontur.

4. Luftgefederte Fahrzeugachse nach einem der vorangehenden Ansprüche, **dadurch gekennzeichnet, dass** der Vorsprung (35) bzw. jeder Vorsprung (35) als Rippe mit spitz zulaufendem Querschnitt geformt ist.

5. Luftgefederte Fahrzeugachse nach einem der vorangehenden Ansprüche, **dadurch gekennzeichnet, dass** die Spitze des Vorsprungs (35) bzw. der Gruppe von Vorsprüngen (35) zwischen 0,3 und 1,5 mm gegenüber der Bodenfläche (26) hervorsteht.

6. Luftgefederte Fahrzeugachse nach einem der vorangehenden Ansprüche, **dadurch gekennzeichnet, dass** der Tauchkolben (8) im Wesentlichen aus Kunststoff besteht, und dass der Vorsprung (35) bzw. die Gruppe von Vorsprüngen (35) im Kunststoffmaterial mit angeformt ist.

7. Luftgefederte Fahrzeugachse nach einem der vorangehenden Ansprüche, **dadurch gekennzeichnet, dass** der Tauchkolben (8) mit einer Doppelwandung unter Bildung einer zylindrischen Innenkammer (21) und einer ringförmigen Außenkammer (22) versehen ist, wobei die Außenwandung den Tauchkolbenmantel einschließlich der Anlagefläche (8a) bildet, und wobei die von der Innenwandung (23) umschlossene Innenkammer (21), dem Rollbalg (7) abgewandt, durch die zentral mit der Befestigungsöffnung (25) versehene Bodenfläche (26) verschlossen ist.

8. Luftgefederte Fahrzeugachse nach Anspruch 7, **dadurch gekennzeichnet, dass** die ringförmige Außenkammer (22) des Tauchkolbens (8), dem Rollbalg (7) zugewandt, verschlossen ist.

9. Luftgefederte Fahrzeugachse nach Anspruch 7 oder 8, **dadurch gekennzeichnet, dass** der Tauchkolbenmantel über einstückig im Kunststoffmaterial angeformte Stege (31), vorzugsweise radial angeordnete Stege, mit der Innenwandung (23) verbunden ist.

10. Luftgefederte Fahrzeugachse nach einem der Ansprüche 7 - 9, **dadurch gekennzeichnet, dass** die Innenwandung (23) über einstückig im Kunststoffmaterial angeformte Stege (32), vorzugsweise radial angeordnete Stege, mit einer in axialer Verlängerung zu der Befestigungsöffnung (25) angeordneten Buchse (29) verbunden ist.

11. Luftgefederte Fahrzeugachse mit einer an Längslenkern (3) geführten Achse (4) und einem auf dem rückwärtigen Teil des jeweiligen Längslenkers (3) verschraubten Tauchkolben (8), der gemeinsam mit einem Rollbalg (7) Bestandteil einer Luftfeder (5) ist, dessen Tauchkolbenmantel als Anlagefläche (8a) für den Rollbalg (7) beim Einfedern dient und dessen Unterseite zur Abstützung auf der Oberseite (15) des Längslenkers (3) mit einer um eine zentrale Befestigungsöffnung (25) herum angeordneten Bodenfläche (26) versehen ist, wobei mindestens eine Struktur des Tauchkolbens (8), die als ein Vorsprung (35) oder eine Gruppe von Vorsprüngen, der/die um die zentrale Befestigungsöffnung (25) herum verteilt angeordnet ist, ausgebildet ist, gegenüber der Ebene der Bodenfläche (26) nach unten hervorsteht,
**dadurch gekennzeichnet,**
**dass** zur Drehsicherung des Tauchkolbens (8) die Vorsprünge so ausgebildet sind, dass durch den Verschraubungsdruck einzelne Vorsprünge abbrechen, unter Ausbildung einer Art Stufe und damit eines Formschlusses gegenüber benachbarten, nicht weggebrochenen Vorsprüngen.

## Claims

1. Air-sprung vehicle axle, having an axle (4) which is guided on trailing arms (3) and having a plunger (8) which is screwed to the rear part of the respective trailing arm (3) and which, together with a rolling lobe (7), is part of an air spring (5), the plunger casing of said plunger serving as a bearing face (8a) for the rolling lobe (7) during the compression and the underside of said plunger, for support against the upper side (15) of the trailing arm (3), being provided with a bottom face (26) arranged around a central fastening opening (25), wherein at least one structure of the plunger (8), which structure is configured as a protrusion (35) or a group of protrusions arranged in a manner distributed around the central fastening opening (25), projects downwards relative to the plane of the bottom face (26), **characterized in that**, in order to prevent rotation of the plunger (8), only regions of the structure (35) bear against the upper side (15) of the trailing arm (3), thereby being compressed axially and crushed, and the remaining regions of the structure (35) are not deformed, which results in a form fit at the stepped transitions between deformed and non-deformed regions.

2. Air-sprung vehicle axle according to claim 1, **characterized in that** the protrusion (35) or the group of protrusions extends in the manner of a ring around the central fastening opening (25).

3. Air-sprung vehicle axle according to claim 2, **characterized in that** the bottom face (26) within the ring has a contour drawn in towards the plunger (8), preferably a spherically curved or concave contour.

4. Air-sprung vehicle axle according to any one of the preceding claims, **characterized in that** the protrusion (35) or each protrusion (35) is shaped as a rib with a cross-section tapering to a tip.

5. Air-sprung vehicle axle according to any one of the preceding claims, **characterized in that** the tip of the protrusion (35) or of the group of protrusions (35) projects by between 0.3 and 1.5 mm relative to the bottom face (26).

6. Air-sprung vehicle axle according to any one of the preceding claims, **characterized in that** the plunger (8) is made substantially of plastic, and **in that** the protrusion (35) or the group of protrusions (35) is integrally formed therewith in the plastic material.

7. Air-sprung vehicle axle according to any one of the preceding claims, **characterized in that** the plunger (8) is provided with a double wall, thereby forming a cylindrical inner chamber (21) and an annular outer chamber (22), wherein the outer wall forms the plunger casing including the bearing face (8a), and wherein the inner chamber (21), which is surrounded by the inner wall (23) and faces away from the rolling lobe (7), is closed by the bottom face (26) which is provided with the fastening opening (25) in the centre.

8. Air-sprung vehicle axle according to claim 7, **characterized in that** the annular outer chamber (22) of the plunger (8), facing towards the rolling lobe (7), is closed.

9. Air-sprung vehicle axle according to claim 7 or 8, **characterized in that** the plunger casing is connected to the inner wall (23) via webs (31) integrally formed in the plastic material, preferably radially arranged webs.

10. Air-sprung vehicle axle according to any one of claims 7 to 9, **characterized in that** the inner wall (23) is connected to a bushing (29), arranged in the axial extension of the fastening opening (25), via webs (32) integrally formed in the plastic material, preferably radially arranged webs.

11. Air-sprung vehicle axle, having an axle (4) which is guided on trailing arms (3) and having a plunger (8) which is screwed to the rear part of the respective trailing arm (3) and which, together with a rolling lobe (7), is part of an air spring (5), the plunger casing of said plunger serving as a bearing face (8a) for the rolling lobe (7) during the compression and the underside of said plunger, for support against the upper side (15) of the trailing arm (3), being provided with a bottom face (26) arranged around a central fastening opening (25), wherein at least one structure of the plunger (8), which structure is configured as a protrusion (35) or a group of protrusions arranged in a manner distributed around the central fastening opening (25), projects downwards relative to the plane of the bottom face (26), **characterized in that**, in order to prevent rotation of the plunger (8), the protrusions are configured in such a way that individual protrusions break off as a result of the screwing pressure, thereby forming a kind of step and thus a form fit in relation to adjacent protrusions which have not broken off.

## Revendications

1. Essieu de véhicule à suspension pneumatique ayant un essieu (4) guidé sur des bras oscillants longitudinaux (3) et un piston plongeur (8) vissé sur la partie arrière de chaque bras oscillant longitudinal (3), lequel piston plongeur associé à un soufflet roulant (7) est un composant d'un ressort pneumatique (5) dont l'enveloppe de piston plongeur sert de surface de contact (8a) pour le soufflet roulant (7) lors de la compression et dont le côté inférieur est muni d'une surface de fond (26) agencée autour d'une ouverture de fixation centrale (25) afin d'être en appui sur le côté supérieur (15) du bras oscillant longitudinal (3), dans lequel au moins une structure du piston plongeur (8), qui est agencée de manière répartie autour de l'ouverture de fixation centrale (25), est conçue comme une saillie (35) ou un groupe de saillies qui font saillie vers le bas par rapport au plan de la surface de fond (26),
**caractérisé en ce que**
sous l'effet de la compression axiale et de l'écrasement, seules des zones de la structure (35) viennent en contact avec le côté supérieur (15) du bras oscillant longitudinal (3) pour bloquer le piston plongeur (8) en rotation et les zones restantes de la structure (35) ne sont pas déformées, le résultat étant une complémentarité de formes sur les transitions par gradins entre des zones déformées et non déformées.

2. Essieu de véhicule à suspension pneumatique selon la revendication 1, **caractérisé en ce que** la saillie (35) ou le groupe de saillies s'étend autour de l'ouverture de fixation centrale (25) sous la forme d'un anneau.

3. Essieu de véhicule à suspension pneumatique selon la revendication 2, **caractérisé en ce que** la surface de fond (26) à l'intérieur de l'anneau présente un contour rentré vers le piston plongeur (8), de préférence un contour sphériquement convexe ou concave.

4. Essieu de véhicule à suspension pneumatique selon l'une des revendications précédentes, **caractérisé en ce que** la saillie (35) ou chaque saillie (35) est formée comme une nervure ayant une section transversale en pointe.

5. Essieu de véhicule à suspension pneumatique selon l'une des revendications précédentes, **caractérisé en ce que** la pointe de la saillie (35) ou du groupe de saillies (35) fait saillie entre 0,3 et 1,5 mm par rapport à la surface de fond (26).

6. Essieu de véhicule à suspension pneumatique selon l'une des revendications précédentes, **caractérisé en ce que** le piston plongeur (8) est essentiellement constitué de matière plastique, et **en ce que** la saillie (35) ou le groupe de saillies (35) est moulé dans la matière plastique.

7. Essieu de véhicule à suspension pneumatique selon les revendications précédentes, **caractérisé en ce que** le piston plongeur (8) est muni d'une double paroi en formant une chambre intérieure cylindrique (21) et une chambre extérieure annulaire (22), dans lequel la paroi extérieure forme l'enveloppe de piston plongeur incluant la surface de contact (8a), et dans lequel la chambre intérieure (21) opposée au soufflet roulant (7) et entourée par la paroi intérieure (23) est fermée par la surface de fond (26) munie de l'ouverture de fixation centrale (25).

8. Essieu de véhicule à suspension pneumatique selon la revendication 7, **caractérisé en ce que** la chambre extérieure annulaire (22) du piston plongeur (8) dirigée vers le soufflet roulant (7) est fermée.

9. Essieu de véhicule à suspension pneumatique selon la revendication 7 ou 8, **caractérisé en ce que** l'enveloppe de piston plongeur est reliée à la paroi intérieure (23) par l'intermédiaire d'entretoises (31) formées d'une seule pièce dans la matière plastique, de préférence des entretoises agencées radialement.

10. Essieu de véhicule à suspension pneumatique selon l'une des revendications 7 à 9, **caractérisé en ce que** la paroi intérieure (23) est reliée à une bague (29) agencée dans une extension axiale par rapport à l'ouverture de fixation (25), par l'intermédiaire d'entretoises (32) formées d'une seule pièce dans la matière plastique, de préférence des entretoises agencées radialement.

11. Essieu de véhicule à suspension pneumatique comportant un essieu (4) guidé sur des bras oscillants longitudinaux (3) et un piston plongeur (8) vissé sur la partie arrière de chaque bras oscillant longitudinal (3), lequel piston plongeur associé à un soufflet roulant (7) est un composant d'un ressort pneumatique (5), dont l'enveloppe de piston plongeur sert de surface de contact (8a) pour le soufflet roulant (7) lors de la compression et dont le côté inférieur est muni d'une surface de fond (26) agencée autour d'une ouverture de fixation centrale (25) afin d'être en appui sur le côté supérieur (15) du bras oscillant longitudinal (3), dans lequel au moins une structure du piston plongeur (8) est conçue sous la forme d'une saillie (35) ou d'un groupe de saillies agencées de manière répartie autour de l'ouverture de fixation centrale (25), fait saillie vers le bas par rapport au plan de la surface de fond (26),
**caractérisé en ce que**
les saillies sont conçues pour bloquer le piston plongeur (8) en rotation, de telle sorte que des saillies individuelles se rompent en raison de la pression de vissage, en formant une sorte de gradin et ainsi un assemblage par complémentarité de formes par rapport à des saillies voisines, non cassées.
